# EUROPEAN PATENT SPECIFICATION

(11) **EP 0 389 707 B1**
(45) Date of publication and mention of the grant of the patent: **15.12.1993**
(21) Application number: 89306191.1
(22) Date of filing: 19.06.1989
(51) Int. Cl.: F03B 13/20

(54) **Apparatus for converting extrinsic useless oscillatory motions into useful torque**
Vorrichtung zur Umwandlung von extrinsieken Schwingungsbewegungen in nutzbare Energie
Dispositif de conversion de mouvements oscillatoires extrinsèques en énergie utilisable

(30) Priority: 31.03.1989 JP 78649/89
(43) Date of publication of application: 03.10.1990
(73) Proprietor: Nakano, Kazuo, Setagaya-ku Tokyo (JP)
(72) Inventor: Nakano, Kazuo, Setagaya-ku Tokyo (JP)
(74) Representative: Price, Paul Anthony King

(56) References cited:
- FR-A- 351 937
- GB-A- 175 928
- US-A- 4 352 023

## Description

The present invention relates to an apparatus for converting extrinsic useless (that is to say, usually non-usable) oscillatory motions such as those of ocean waves into a useful torque. The apparatus is for example provided with a frame fixedly mounted on a supporting floor of a carrier such as a marine vessel or the like, in which frame of the apparatus are swingably mounted a pair of swinging pendulums subjected to the extrinsic oscillatory motions observed in natural phenomena such as ocean waves, wind and the like or other natural or artificial oscillatory motions, so that the swinging pendulums mounted in the frame of the apparatus are swingably driven in substantially the same way as a gyroscope's gimbals by the extrinsic oscillatory motions to produce a useful torque for driving equipment such as an electric generator.

Hitherto, in some vehicles such as marine vessels, land vehicles and the like subjected to extrinsic useless oscillatory motions such as those of ocean waves and the like, an apparatus provided with swinging pendulums has been fixedly mounted in the vehicles to convert the extrinsic oscillatory motions swingably driving its swinging pendulums into a useful torque for driving equipment.

In the above-mentioned conventional apparatus, a pair of swinging pendulums are usually employed, a first one of which pendulums is swingably mounted on a first horizontal axle, and the other or a second one of which pendulums is swingably mounted on a second horizontal axle perpendicular to the first horizontal axle, to enable each of the swinging pendulums to produce a torque giving each of their horizontal axles a unidirectional rotation.

However, in such conventional apparatus, since the horizontal axles are individually driven, it is difficult to combine both of the unidirectional rotations of the horizontal axles into a single powerful driving force or torque. In other words, in the conventional apparatus, the unidirectional rotations of the horizontal axles remain uncombined and fail to produce a powerful driving force or torque.

In order to resolve the above disadvantage, there has been proposed another conventional apparatus provided with a pair of bevel gears which are rotatably mounted on a common axle through a pair of unidirectional rotating means or one-way clutches while oppositely disposed from each other. Between the pair of bevel gears another bevel gear fixedly mounted on a torque-output shaft is interposed so as to be meshed with both of the pair of bevel gears mounted on the common axle. The one-way clutches enable the pair of bevel gears to rotate on the common axle in opposite directions counter to each other, which makes it possible to rotate the torque-output shaft in only one direction when the common axle is rotatably driven under the influence of extrinsic oscillatory motions to which the apparatus is subjected. The common axle of the conventional apparatus is rotatably driven by the swinging pendulums rotatably mounted on the common axle through the one-way clutches. Consequently, in this apparatus, the torque-output shaft is rotatably driven only in a plane perpendicular to a plane in which the swinging pendulums are swingably driven under the influence of the extrinsic oscillatory motions.

In addition, in general, since the extrinsic oscillatory motions vary in amplitude, direction and cycle every moment, the swinging pendulums of the conventional apparatus also vary in rotational angle, swinging speed and swinging cycle every moment to make it difficult to convert the extrinsic oscillatory motions into a constant powerful driving force or torque.

Figs. 8 and 10 of US-A-4,352,023 disclose apparatus for converting extrinsic usually non-usable oscillatory motions such as those of ocean waves and the like into a useful torque, comprising: a frame arranged to be fixedly mounted on a carrier such as a marine vessel or the like; a first axle rotatably mounted on said frame to be swingably driven by a first pendulum under the influence of said extrinsic oscillatory motions, said first pendulum being fixedly mounted on said first axle; a second axle arranged substantially perpendicularly to said first axle and rotatably mounted on said first pendulum to be swingably driven by a second pendulum under the influence of said extrinsic oscillatory motions, said second pendulum being fixedly mounted on said second axle; unidirectional rotation means for converting bidirectional rotation of said first axle into unidirectional rotations; and a gear train comprising a first torque-output gear mounted on a main shaft for combining said unidirectional rotations of said unidirectional rotation means into a unidirectional rotation of a torque-output shaft; wherein said unidirectional rotation means comprises: an auxiliary axle; first and second one-way clutches; a first unidirectional-rotation gear mounted on said auxiliary axle, said auxiliary axle having mounted thereon an intermediate gear meshed with a primary gear mounted on said first axle; and a second unidirectional-rotation gear rotatably mounted on said first axle through said second one-way clutch, said first and second unidirectional-rotation gears being meshed with said first torque-output gear. The second axle is not connected to the gear train. In order to extract power from the bidirectional rotation of the second axle, the second axle carries a gyroscope so that bidirectional rotation of the second axle causes the gyroscope to induce bidirectional rotation of the first axle which is fed into the unidirectional rotation means and the gear train.

In relation to a single pendulum system, GB-A-175,928 discloses unidirectional rotation means and a gear train of the general type disclosed in US-A-4,352,023.

According to the present invention, there is provided apparatus for converting extrinsic usually non-usable oscillatory motions such as those of ocean waves and the like into a useful torque, comprising: a frame arranged to be fixedly mounted on a carrier such as a marine vessel or the like; a first axle rotatably mounted on said frame to be swingably driven by a first pendulum under the influence of said extrinsic oscillatory motions, said first pendulum being fixedly mounted on said first axle; a second axle arranged substantially perpendicularly to said first axle and rotatably mounted on said first pendulum to be swingably driven by a second pendulum under the influence of said extrinsic oscillatory motions, said second pendulum being fixedly mounted on said second axle; unidirectional rotation means for converting bidirectional rotation of said first axle into unidirectional rotations; and a gear train comprising a first torque-output gear mounted on a main shaft for combining said unidirectional rotations of said unidirectional rotation means into a unidirectional rotation of a torque-output shaft; wherein said unidirectional rotation means comprises: an auxiliary axle; first and second one-way clutches; a first unidirectional-rotation gear mounted on said auxiliary axle, said auxiliary axle having mounted thereon an intermediate gear meshed with a primary gear mounted on said first axle; and a second unidirectional-rotation gear rotatably mounted on said first axle through said second one-way clutch, said first and second unidirectional-rotation gears being meshed with said first torque-output gear; characterized in that: said first unidirectional-rotation gear is rotatably mounted on said auxiliary axle through said first one-way clutch and said primary gear is fixedly mounted on said first axle; said first axle is hollow; said gear train further comprises a second torque-output gear mounted on said main shaft; and said unidirectional rotation means further comprises: a third axle rotatably mounted in said hollow first axle; a pair of bevel gears mounted on said second axle through third and fourth one-way clutches and meshed with a bevel gear fixed to said third axle, thereby to convert bidirectional rotation of said second axle into a unidirectional rotation of said third axle; and a gear fixedly mounted on said third axle and meshed with said second torque-output gear.

By making the first axle hollow and locating a third axle in the first axle, the second axle is mechanically connected to the gear train and torque-output shaft.

Since the torque-output shaft may extend in any desired direction with respect to the directions of the first and second axles, the apparatus of the present invention is very versatile.

The apparatus of the present invention is very simple in construction and efficiently converts the extrinsic useless oscillatory motions such as those of ocean waves and the like into useful smooth torque. Consequently, the user can employ the apparatus of the present invention in marine vessels constantly subjected to the oscillatory motions of ocean waves, and also in land vehicles constantly subjected to vibrations. In addition, the apparatus of the present invention can be employed as a portable or man-carrying apparatus for converting walking motions of the user into useful torque.

Preferably, the apparatus further comprises a power spring axle drivable by said torque-output shaft and to which an inner end portion of a power spring is connected, said power spring being drivable by said power spring axle to accumulate torque; a power spring gear to which an outer end portion of said power spring is connected, said power spring gear being rotatably mounted on said power spring axle; a ratchet wheel rotatable with a gear of a gear train meshed with said power spring gear; detent means for preventing said ratchet wheel from rotating; and releasing means for releasing said ratchet wheel from said detent means, said releasing means being fixedly mounted on a gear meshed with a gear of said power spring axle.

With this arrangement, the torque of the torque-output shaft may be temporarily accumulated in the power spring until the thus accumulated torque reaches a predetermined value, and then a torque of more than the predetermined value is released from the power spring to enable the power spring to drive even a heavy load. The power spring is also able to drive the load at a constant speed through a constant-speed driving unit.

A non-limiting embodiment of an apparatus in accordance with the present invention for converting extrinsic useless oscillatory motions such as those of ocean waves and the like into useful smooth torque will now be described with reference to the accompanying drawings in which:-
Fig. 1 is a plan view of the apparatus, in which the extrinsic useless oscillatory motions are converted into useful smooth torque which is temporarily accumulated in a power spring;
Fig. 2 is a partially broken plan view of a swinging pendulum section of the apparatus;
Fig. 3 is a front view of a gear train combined with the swinging pendulum section, the gear train being adapted to give a torque-output shaft a unidirectional rotation;
Fig. 4 is a side view of the gear train;
Fig. 5 is a front view of a power spring section;
Fig. 6 is a side view of a gear train of the power spring section; and
Fig. 7 is a side view of a detent mechanism employed in the power spring section.

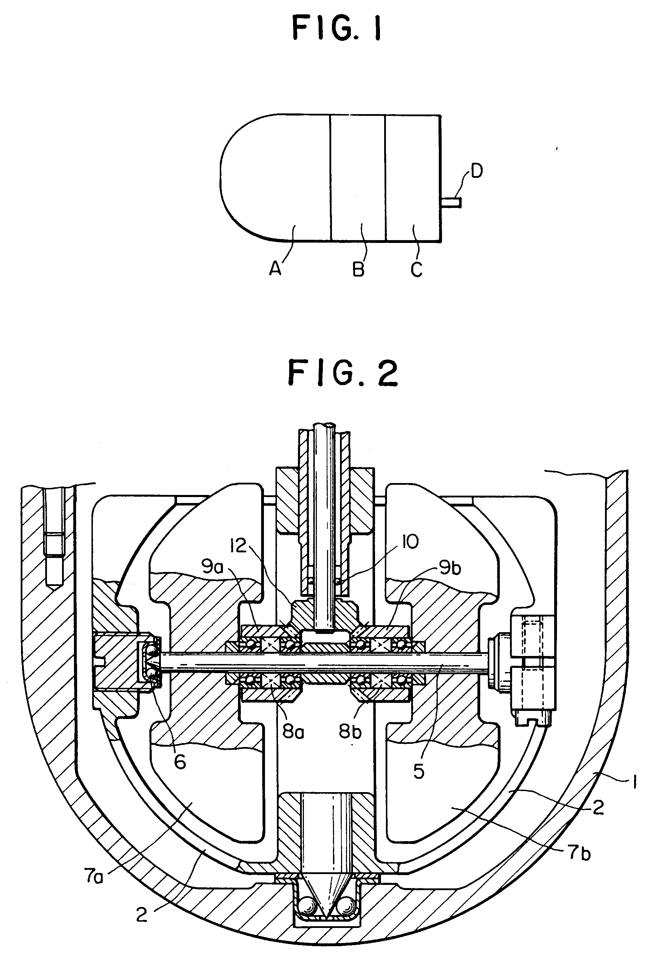

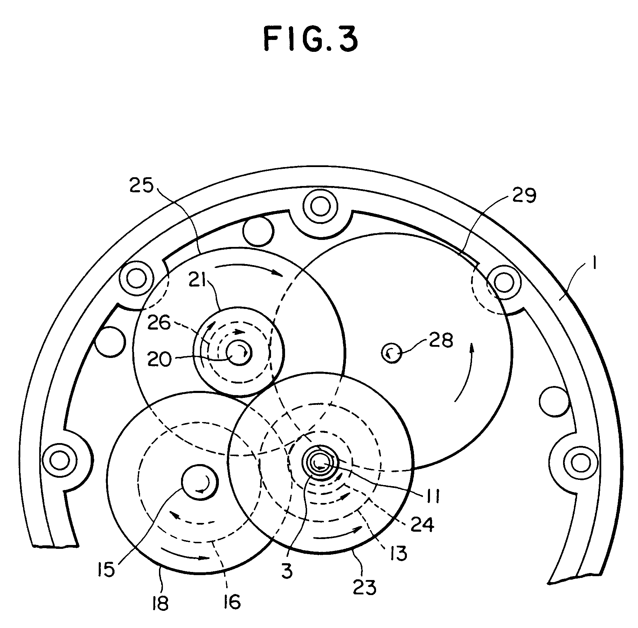

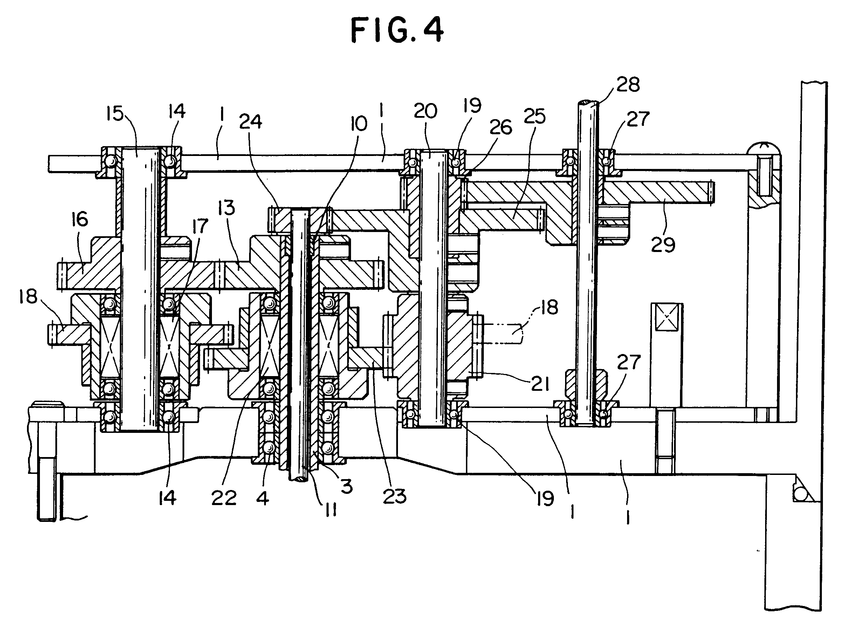

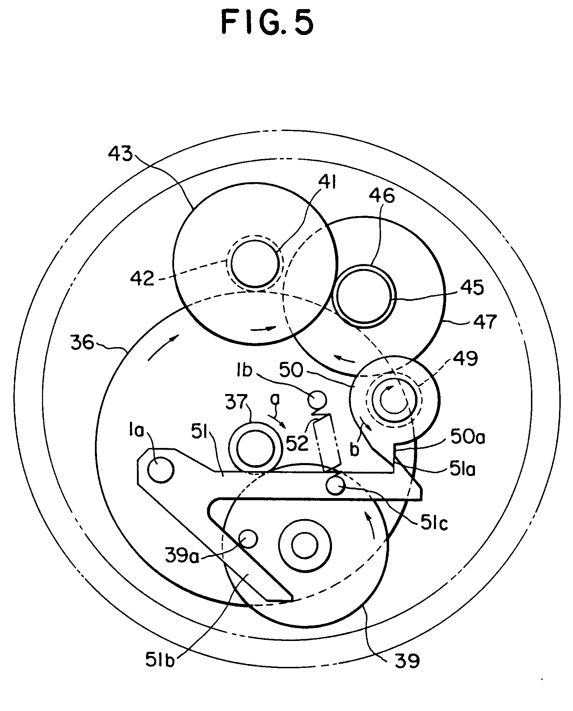

In Fig. 1, the reference character "A" denotes a swinging pendulum section of the embodiment of the apparatus of the present invention; "B" a gearing section of the embodiment, shown in Figs. 3 and 4; "C" a power spring section of the embodiment, shown in Figs. 5 to 7; and "D" a torque-output shaft.

In Fig. 2, reference numeral 1 denotes a frame of the apparatus of the embodiment, the frame 1 being fixedly mounted on a supporting floor of a suitable carrier such as a marine vessel, buoy, land vehicle or the like. As shown in Fig. 4, in the frame 1 of the apparatus a first hollow rotating axle 3 is horizontally and rotatably mounted in a bearing 4. A first swinging pendulum 2 is fixedly mounted on the hollow rotating axle 3.

In the first swinging pendulum 2, a second horizontal rotating axle 5 is rotatably mounted in a pair of bearings 6 as shown in Fig. 2, so as to assume substantially the same configuration of that of a gyroscope's gimbals. Consequently, the axle 5 is so arranged as to be substantially perpendicular to the axle 3 as shown in Fig. 2. On opposite end portions of the axle 5 are fixedly mounted a pair of second swinging pendulums 7a and 7b, respectively.

As shown in Fig. 2, a pair of bevel gears 9a and 9b are rotatably mounted on the second axle 5 through a pair of unidirectional rotating means or one-way clutches 8a and 8b respectively, so as to be able to rotate in opposite directions to each other.

Interposed between these bevel gears 9a, 9b so as to be meshed therewith is another bevel gear 12 which is fixedly mounted on an end portion of a central axle 11. The axle 11 is coaxially and rotatably mounted in the first axle 3 through a pair of bearings 10 mounted in the hollow axle 3.

Consequently, when the frame 1 swings in a plane perpendicular to the longitudinal axis of the hollow axle 3, the first swinging pendulum 2 tries to remain stationary and therefore the frame 1 swings relative to the pendulum 2, whereby the hollow axle 3 is rotatably driven.

On the other hand, when the frame 1 swings in a plane perpendicular to the longitudinal axis of the rotating axle 5, the second swinging pendulums 7a, 7b try to remain stationary and therefore the frame 1 and first pendulum 2 swing relative to the pendulums 7a, 7b so that the axle 5 is rotatably driven.

Since the pair of bevel gears 9a and 9b are rotatably mounted on the second rotating axle 5 through the pair of one-way clutches 8a and 8b arranged to rotate in opposite directions, when one of the bevel gears 9a, 9b drives the bevel gear 12 of the central axle 11 under the influence of the extrinsic oscillatory motions, the other of the bevel gears 9a, 9b is driven by the bevel gear 12 to rotate freely on the axle 5.

Consequently, when the other of the bevel gears 9a, 9b drives the bevel gear 12 under the influence of the extrinsic oscillatory motions, the first one of the bevel gears 9a, 9b is driven by the bevel gear 12 to rotate freely on the axle 5.

As a result, the central axle 11 is rotatably driven constantly in only one direction by the bevel gear 12.

In Figs. 3 and 4, reference numeral 13 denotes a gear fixedly mounted on the first or hollow axle 3. The gear 13 is meshed with a gear 16 fixedly mounted on an auxiliary axle 15 which is rotatably mounted on the frame 1 by a pair of bearings 14.

As shown in Fig. 4, another gear 18 is rotatably mounted on the auxiliary axle 15 through a unidirectional rotating means or one-way clutch 17. The gear 18 is meshed with a gear 21 fixedly mounted on a first main shaft 20 which is rotatably mounted on the frame 1 by a pair of bearings 19 as shown in Fig. 4.

Also on the hollow axle 3, a gear 23 is rotatably mounted through a unidirectional rotating means or one-way clutch 22. The gear 23 is also meshed with the gear 21 of the first main shaft 20 described above.

The auxiliary axle 15 and the hollow axle 3 are adapted to drive the gears 18 and 23 through the one-way clutches 17 and 22, respectively, so as to give the gear 21 of the first main shaft 20 a unidirectional rotation.

Consequently, when the hollow axle 3 is rotatably driven in a first direction by the swinging pendulum 2, the gear 23 is rotatably driven by the hollow axle 3 through the one-way clutch 22 in the first direction so as to give the first shaft 20 a unidirectional rotation through the gear 21. The unidirectional rotation of the first main shaft 20 is also transmitted to the gear 18 to rotate freely the gear 18 on the auxiliary axle 15 through the one-way clutch 17. As is clear from the above description, the unidirectional rotation of the first main shaft 20 transmitted to the gear 18 through the gear 21 does not interfere with the unidirectional rotation of the auxiliary axle 15 at all.

When the hollow axle 3 is rotatably driven in the direction opposite to the first direction by the swinging pendulum 2, the gear 13 fixed to the hollow axle 3 drives the gear 16 fixed to the auxiliary axle 15. The rotation of the auxiliary axle 15 is transmitted to the gear 18 through the one-way clutch 17 so that the gear 21 fixed to the first main shaft 20 is rotatably driven by the gear 18 in the same direction as when the axle 3 was rotating in the first direction.

At the same time, the gear 23 is rotatably driven by the gear 21 as is clear from Fig. 4. However, the rotation of the gear 21 transmitted to the gear 23 is prevented from being transmitted to the hollow axle 3 by the one-way clutch 22.

As described above, when the hollow axle 3 is rotatably driven by the swinging pendulum 2 under the influence of the extrinsic oscillatory motions, the bidirectional rotation of the hollow axle 3 is transmitted to the first main shaft 20 to as to impart unidirectional rotation to the shaft 20.

In addition, as is clear from Fig. 4, a gear 24 is fixedly mounted on the central axle 11 passing through the hollow axle 3. The gear 24 is meshed with a gear 25 fixedly mounted on the first main shaft 20. Consequently, when the central axle 11 is unidirectionally rotated by the second pendulums 7a, 7b and the one-way clutches 8a, 8b, the undirectional rotation of the central axle 11 is transmitted to the main shaft 20 through the gears 24, 25.

Thus, when at least one of the first swinging pendulum 2 and the second swinging pendulums 7a, 7b is swingably driven under the influence of the extrinsic oscillatory motions, the first main shaft 20 is constantly and rotatably driven in only one direction.

As shown in Fig. 4, a gear 26 is coaxially fixed to the gear 25 on the first main shaft 20. A second main shaft 28 is rotatably mounted on the frame 1 through a pair of bearings 27. The gear 26 of the first main shaft 20 is meshed with a gear 29 fixedly mounted on the second main shaft 28 so that the unidirectional rotation of the first main shaft 20 is transmitted to the second main shaft 28.

As shown in Figs. 5 to 7, a gear 30 is fixedly mounted on the second main shaft 28 while meshed with a gear 33 fixedly mounted on a power spring axle 32 which is rotatably mounted on the frame 1 by a pair of bearings 31.

On the power spring axle 32 is fixedly mounted an inner end portion of a power spring 34, an outer end portion of which is fixedly mounted on a pin 36a of a gear 36 which is rotatably mounted on the power spring axle 32 by a pair of bearings 35.

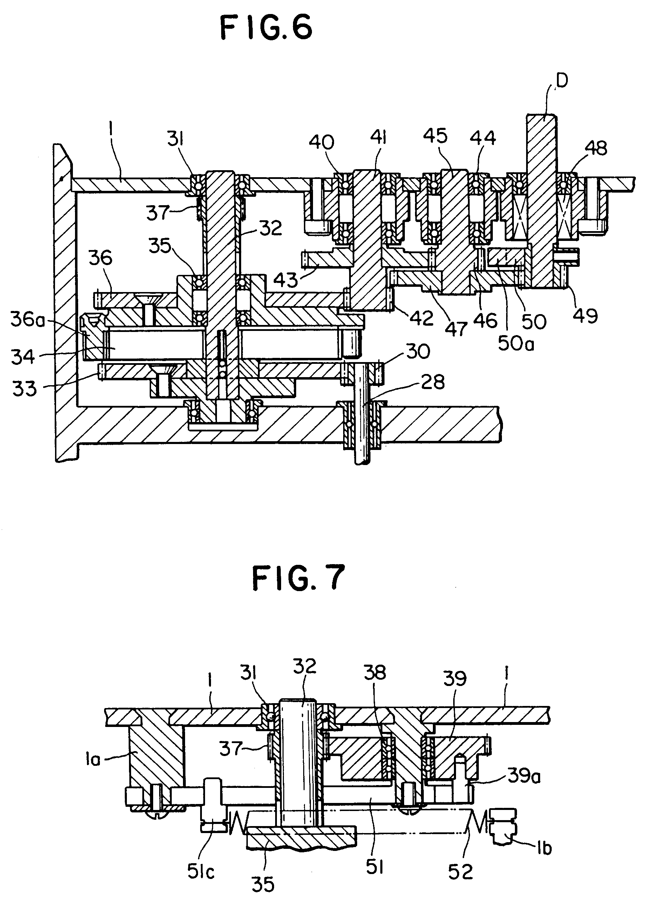

A pinion 37 is fixedly mounted on the power spring axle 32 as shown in Fig. 6. The pinion 37 of the power spring axle 32 is meshed with a gear 39 which is rotatably mounted on the frame 1 through a pair of bearings 38.

In addition, the gear 36 of the power spring axle 32 is meshed with a small gear 42 of a shaft 41 which is rotatably mounted on the frame 1 by a pair of bearings 40. Another gear 43 which is fixedly mounted on the shaft 41 together with the small gear 42 is meshed with a gear 46 fixedly mounted on a shaft 45 which is rotatably mounted on the frame 1 by a pair of bearings 44.

A gear 47 fixedly mounted on the shaft 45 is meshed with a small gear 49 fixedly mounted on the torque-output shaft D. Consequently, when the power spring 34 releases its accumulated driving force or torque to rotatably drive the gear 36, the rotational speed of the gear 36 is increased through a gear train 36, 42, 43, 46, 47 and 49 to enable the torque-output shaft D to rotate at a high speed.

As shown in Figs. 5 and 6, to the small gear 49 is fixed a ratchet wheel 50 provided with a pawl portion 50a which engages with a pawl portion 51a of a substantially V-shaped locking arm 51 which is rotatably mounted on a pin 1a of the frame 1. The ratchet wheel 50 prevents the gear 36 from being rotatably driven by the power spring 34 in a direction of an arrow "a" shown in Fig. 5.

As is clear from Fig. 5, the V-shaped locking arm 51 is also provided with an arm portion 51b which is adapted to abut on a projection or pin 39a which is fixed to the gear 39. When the gear 39 rotates in a direction of an arrow shown in Fig. 5, the gear 39 pushes the arm portion 51b of the locking arm 51. The pin 39a causes the pawl portion 51a of the locking arm 51 to be disengaged from the pawl portion 50a of the ratchet wheel 50, which enables the ratchet wheel 50 to rotate freely with the torque-output shaft D.

As a result, the power spring 34 is released from its locking condition to drive the torque-output shaft D for a period of time.

As shown in Fig. 5, a tension spring 52 is provided between a pin 51c of the locking arm 51 and a pin 1b of the frame 1 to make it that the arm portion 51b of the locking arm 51 is biased towards the pin 39a.

Consequently, after completion of release of the accumulated torque of the power spring 34, the pawl portion 51a of the locking arm 51 is engaged with the pawl portion 50a of the ratchet wheel 50 again to prevent the power spring 34 from being further unwound.

As described above, when the unidirectional rotation is given to the second main shaft 28, the power spring axle 32 is rotatably driven to wind up the power spring so as to accumulate the torque therein.

When the torque accumulated in the power spring 34 reaches a predetermined value or when the power spring 34 is wound up by a predetermined number of turns, the gear 39 meshed with the pinion 37 of the power spring axle 32 substantially completes one turn to enable its pin 39a to push the arm portion 51b of the locking arm 51 backwards so as to release the ratchet wheel 50 from its locking condition.

As a result, the gear 36 is rotatably driven by the power spring 34 to drive the torque-output shaft D for a period of time. After completion of the unwinding of the power spring 34, the pawl portion 51a of the locking arm 51 engages again with the pawl portion 50a of the ratchet wheel 50 under the influence of the resilient force exerted by the tension spring 52. This engagement established between the pawl portions 51a, 50a is enhanced by the pin 39a of the gear 39. The pin 39a pushes forwards the part of the locking arm 51 adjacent the pin 51c, so that the power spring 34 is prevented from continuing to unwind.

As described above, in the above embodiment, the torque derived from the extrinsic useless oscillatory motions such as those of ocean waves and the like is temporarily accumulated in the power spring 34 until the thus accumulated torque reaches a predetermined value, and then, after the accumulated torque reaches the predetermined value, the power spring 34 releases the torque for a period of time to drive the torque-output shaft D. As is clear from the above description, the torque accumulating operation and the release operation of the thus accumulated torque are conducted alternately.

The torque accumulating operation and the release operation of the accumulated torque are adjustable in operation period or cycle by changing gear ratios of the gears employed in the apparatus and the strength of the power spring 34.

In use, the frame 1 is fixedly mounted on a suitable supporting floor of a carrier such as a marine vessel or land vehicle, so that the extrinsic useless oscillatory motions, to which motions the carrier or frame 1 is subjected, are efficiently converted into a useful unidirectional constant torque regardless of variations in direction, amplitude and cycle of the oscillatory motions. The torque is temporarily accumulated in the power spring to enable it to release a large unidirectional smooth torque for a period of time.

As a result, the apparatus can drive equipment such as an electric generator and the like for driving an electric motor and the like.

The embodiment provides a pair of horizontal rotating axles perpendicular to each other. Swinging pendulums are fixedly mounted on each of the horizontal rotating axles rotatably mounted on a frame of the apparatus so that the extrinsic oscillatory motions to which the frame of the apparatus is subjected are converted into a smooth powerful driving force or torque through the swinging pendulums disposed perpendicularly to each other. The constant driving force or torque is output through a torque-output shaft.

The torque-output shaft may be extended in any desired direction with respect to the rotating axles to which the swinging pendulums are fixedly mounted.

The torque produced is temporarily accumulated in a power spring which releases a smooth torque from the apparatus to drive equipment such as an electric generator.

## Claims

1. Apparatus for converting extrinsic usually non-usable oscillatory motions such as those of ocean waves and the like into a useful torque, comprising:
a frame (1) arranged to be fixedly mounted on a carrier such as a marine vessel or the like;
a first axle (3) rotatably mounted on said frame (1) to be swingably driven by a first pendulum (2) under the influence of said extrinsic oscillatory motions, said first pendulum (2) being fixedly mounted on said first axle (3);
a second axle (5) arranged substantially perpendicularly to said first axle (3) and rotatably mounted on said first pendulum (2) to be swingably driven by a second pendulum (7) under the influence of said extrinsic oscillatory motions, said second pendulum (7) being fixedly mounted on said second axle (5);
unidirectional rotation means for converting bidirectional rotation of said first axle (3) into unidirectional rotations; and
a gear train (21, 25, 26, 29) comprising a first torque-output gear (21) mounted on a main shaft (20) for combining said unidirectional rotations of said unidirectional rotation means into a unidirectional rotation of a torque-output shaft (28);
wherein said unidirectional rotation means comprises:
an auxiliary axle (15);
first and second one-way clutches (17, 22);
a first unidirectional-rotation gear (18) mounted on said auxiliary axle (15), said auxiliary axle (15) having mounted thereon an intermediate gear (16) meshed with a primary gear (13) mounted on said first axle (3); and
a second unidirectional-rotation gear (23) rotatably mounted on said first axle (3) through said second one-way clutch (22), said first and second unidirectional-rotation gears (18, 23) being meshed with said first torque-output gear (21);
characterized in that:
said first unidirectional-rotation gear (18) is rotatably mounted on said auxiliary axle (15) through said first one-way clutch (17) and said primary gear (13) is fixedly mounted on said first axle (3);
said first axle (3) is hollow;
said gear train further comprises a second torque-output gear (25) mounted on said main shaft (20); and
said unidirectional rotation means further comprises:
a third axle (11) rotatably mounted in said hollow first axle (3);
a pair of bevel gears (9a, 9b) mounted on said second axle (5) through third and fourth one-way clutches (8a, 8b) and meshed with a bevel gear (12) fixed to said third axle (11), thereby to convert bidirectional rotation of said second axle (5) into a unidirectional rotation of said third axle (11); and
a gear (24) fixedly mounted on said third axle (11) and meshed with said second torque-output gear (25).

2. Apparatus according to claim 1, further comprising:
a power spring axle (32) drivable by said torque-output shaft (28) and to which an inner end portion of a power spring (34) is connected, said power spring (34) being drivable by said power spring axle (32) to accumulate torque;
a power spring gear (36) to which an outer end portion of said power spring (34) is connected, said power spring gear (36) being rotatably mounted on said power spring axle (32);
a ratchet wheel (50) rotatable with a gear (49) of a gear train (42 to 49) meshed with said power spring gear (36);
detent means (51) for preventing said ratchet wheel (50) from rotating; and
releasing means (39a) for releasing said ratchet wheel (50) from said detent means (51), said releasing means (39a) being fixedly mounted on a gear (39) meshed with a gear (37) of said power spring axle (32).

## Patentansprüche

1. Vorrichtung zum Umwandeln von außen vorgegebener, Üblicherweise nicht nutzbarer Hin- und Herbewegungen, wie z.B. der von Meereswellen und dergleichen, in ein nützliches Drehmoment, mit:
einem Rahmen (1), der so angeordnet ist, daß er auf einem Träger, wie z.B. einem Meeresfahrzeug oder dergleichen montierbar ist,
einer ersten Achse (3), die drehbar an dem Rahmen (1) montiert ist, um durch Schwingungen von einem ersten Pendel (2) unter dem Einfluß der von außen vorgegebenen Hin- und Herbewegungen angetrieben zu werden, wobei das erste Pendel (2) fest an der ersten Achse (3) montiert ist,
einer zweiten Achse (5), welche im wesentlichen rechtwinklig zu der ersten Achse (3) angeordnet und an dem ersten Pendel (2) drehbar montiert ist, um von einem zweiten Pendel (7) unter dem Einfluß der von außen vorgegebenen Hin- und Herbewegungen durch Schwingungen angetrieben zu werden, wobei das zweite Pendel (7) fest an der zweiten Achse (5) montiert ist,
Gleichrichtungs-Dreheinrichtungen für das Umwandeln von Drehungen der ersten Achse in zwei Richtungen (3) in Drehungen in einer Richtung, und
einem Getriebezug (21, 25, 26, 29), der ein erstes Drehmomentabgabegetrieberad (21) hat, welches auf einer Hauptwelle (20) montiert ist, um die in einer Richtung gerichteten Drehungen der Gleichrichtungsdreheinrichtung zu einer in einer Richtung gerichteten Drehung einer Drehmomentabgabewelle (28) zusammenzusetzen,
wobei die Gieichrichtungsdreheinrichtung aufweist:
eine Hilfsachse (15),
erste und zweite Einwegekupplungen (17, 22),
ein erstes in einer Richtung drehendes Zahnrad (18), weiches auf der Hilfsachse (15) montiert ist, wobei die Hilfsachse (15) ein darauf montiertes Zwischenzahnrad (16) aufweist, weiches mit einem Primärzahnrad (13) kämmt, das auf der ersten Achse (3) montiert ist, und
einem zweiten in einer Richtung drehenden Zahnrad (23), da über die Einwegekupplung (22) drehbar auf der ersten Achse (3) montiert ist, wobei die ersten und zweiten in einer Richtung drehenden Zahnräder (18, 23) in Kämmeingriff mit dem ersten Drehmomentabgabezahnrad (21) stehen,
dadurch gekennzeichnet, daß
das erste, in einer Richtung drehende Zahnrad (18) über die erste Einwegekupplung (17) drehbar auf der Hilfsachse montiert ist und daß da Primärzahnrad (13) fest auf der ersten Achse montiert ist,
die erste Achse (3) hohl ist,
der Getriebezug weiterhin ein zweites Drehmomentabgabezahnrad (25) aufweist, welches auf der Hauptwelle (20) montiert ist,
und daß die Gleichrichtungsdreheinrichtung weiterhin aufweist:
eine dritte Achse (11), die drehbar in der hohlen ersten Achse (3) montiert ist,
ein Paar von Kegelzahnrädern (9a, 9b), welche auf der zweiten Achse (5) über dritte und vierte Einwegekupplungen (8a, 8b) montiert sind und die mit einem Kegelzahnrad (12) kämmen, welches an der dritten Achse (11) befestigt ist, um dadurch eine zweiseitige Drehung der zweiten Achse (5) in eine Drehung in nur einer Richtung der dritten Achse (11) umzuwandeln, und
ein Zahnrad (24), das auf der dritten Achse (11) fest montiert ist und mit dem zweiten Drehmomentabgabezahnrad (25) kämmt.

2. Vorrichtung nach Anspruch 1, welche weiterhin aufweist:
eine Kraftfederachse (32), die durch die Drehmomentabgabewelle (28) antreibbar ist und mit weicher ein innerer Endabschnitt einer Kraftfeder (34) verbunden ist, wobei die Kraftfeder (34) durch die Kraftfederachse (32) antreibbar ist, um Drehmoment anzusammeln,
ein Kraftfederzahnrad (36), mit welchem ein äußerer Endabschnitt der Kraftfeder (34) verbunden ist, wobei das Kraftfederzahnrad (36) drehbar auf der Kraftfederachse (32) montiert ist,
ein Ratschenrad (49), das mit einem Zahnrad (49) eines Getriebezuges (42-49) drehbar ist, welcher mit dem Kraftfederzahnrad (36) in Kämmeingriff steht,
eine Arretiereinrichtung (51), um zu verhindern, daß sich das Ratschenrad (50) dreht, und einer Freigabeeinrichtung (39a), um das Ratschenrad (50) von der Arretiereinrichtung (51) zu lösen, wobei die Freigabeeinrichtung (39a) fest auf einem Zahnrad (39) montiert ist,
das in Kämmeingriff mit einem Zahnrad (37) der Kraftfederachse (32) steht.

## Revendications

1. Appareil pour la conversion de mouvements oscillatoires extrinsèques généralement inutilisables, tel que des vagues de mer ou analogues, en couple utilisable, comportant:
un bâti (1) disposé pour être monté solidaire d'un porteur tel que bateau marin ou analogue;
un premier axe (3) monté à rotation sur le bâti (1) pour être entraîné en balancement par un premier pendule (2) sous l'influence desdits mouvements oscillatoires extrinsèques, ledit premier pendule (2) étant monté solidarisé sur le premier axe (3);
un deuxième axe (5) disposé sensiblement perpendiculairement au premier axe (3) et monté en rotation sur ledit premier pendule (2) pour être entraîné en balancement par un second pendule (7) sous l'influence desdits mouvements oscillatoires extrinsèques, ledit second pendule (7) étant monté solidarisé sur ledit second axe (5);
des moyens de rotation unidirectionnelle pour convertir la rotation bidirectionnelle dudit premier axe (3) en rotation unidirectionnelle; et
un train d'engrenages (21, 25, 26, 29) comprenant un premier pignon (21) de sortie de couple, monté sur un arbre principal (20) pour combiner lesdites rotations unidirectionnelles desdits moyens de rotation unidirectionnelle d'un arbre de sortie de couple (28);
dans lequel lesdits moyens de rotation unidirectionnelle comprennent:
un axe auxiliaire (15);
des première et deuxième roues libres (17, 22);
un premier pignon à rotation unidirectionnelle (18) monté sur ledit axe auxiliaire (15), ledit axe auxiliaire (15) présentant, monté sur lui, un pignon intermédiaire (16), en prise avec un pignon primaire (13) monté sur ledit premier axe (3); et
un second pignon à rotation unidirectionnelle (23), monté tournant sur ledit premier axe (3) par l'intermédiaire de la deuxième roue libre (22), lesdits premier et second pignons à rotation unidirectionnelle (18, 23) étant en prise avec ledit premier pignon de sortie de couple (21);
caractérisé en ce que:
ledit premier pignon à rotation unidirectionnelle (18) est monté tournant sur ledit axe auxiliaire (15) par l'intermédiaire de ladite première roue libre (17), et ledit pignon primaire (13) est monté solidarisé sur ledit premier axe (3);
ledit premier axe (3) est creux;
ledit train d'engrenage comprend en outre un second pignon de sortie de couple (25) monté sur ledit arbre principal (20); et
lesdits moyens de rotation unidirectionnelle comprennent en outre:
un troisième axe (11) monté tournant dans ledit arbre creux (3);
une paire de pignons coniques (9a, 9b) montés sur ledit second axe (5) par l'intermédiaire de troisième et quatrième roues libres (8a, 8b), et en prise avec un pignon conique (12) fixé audit troisième axe (11), convertissant ainsi la rotation bidirectionnelle dudit deuxième axe (5) en rotation unidirectionnelle dudit troisième axe (11); et
un pignon (24), monté solidarisé sur ledit troisième axe (11) et en prise avec ledit second pignon de sortie de couple (25).

2. Appareil selon la revendication 1, comportant en outre:
un axe de ressort de puissance (32) entraînable par ledit arbre de sortie de couple (28) et auquel est reliée une partie terminale intérieure d'un ressort de puissance (34), ledit ressort de puissance (34) étant entraînable par ledit axe de ressort de puissance (32) pour accumuler du couple;
un pignon de ressort de puissance (36) auquel est reliée une partie terminale extérieure dudit ressort de puissance (34), ledit pignon de ressort de puissance (36) étant monté tournant sur ledit axe de ressort de puissance (32);
une roue à rochet (50) propre à tourner avec un pignon (49) d'un train d'engrenage (42 à 49) en prise avec ledit pignon de ressort de puissance (36);
des moyens de cliquet (51) pour interdire la rotation de ladite roue à rochet (50); et
des moyens de libération (39a) pour libérer la roue à rochet (50) dudit moyen de cliquet (51), lesdits moyens de libération (39a) étant montés solidarisés sur un pignon (39) en prise avec un pignon (37) dudit axe de ressort de puissance (32).
